# EUROPÄISCHE PATENTSCHRIFT

(11) **EP 4 020 052 B1**
(45) Veröffentlichungstag und Bekanntmachung des Hinweises auf die Patenterteilung: **28.10.2026**
(21) Anmeldenummer: 21216055.0
(22) Anmeldetag: 20.12.2021
(51) Int. Cl.: G02B 21/00, G01N 21/64, G02B 27/58

(54) **VERFAHREN ZUM ABBILDEN EINER INTERESSIERENDEN STRUKTUR EINER PROBE UND STED-MIKROSKOP MIT ARRAY-DETEKTOR ZU DESSEN DURCHFÜHRUNG**
METHOD OF IMAGING A STRUCTURE OF A SPECIMEN OF INTEREST, AND STED-MICROSCOPE WITH ARRAY DETECTOR FOR PERFORMING THE METHOD
PROCÉDÉ D'IMAGERIE D'UNE STRUCTURE D'INTÉRÊT D'UN ÉCHANTILLON ET MICROSCOPE DU TYPE STED POURVU DE DÉTECTEUR MATRICIEL DESTINÉ À SA MISE EN OEUVRE

(30) Priorität: 23.12.2020 DE 102020134797
(43) Veröffentlichungstag der Anmeldung: 29.06.2022
(73) Patentinhaber: Abberior Instruments GmbH, 37077 Göttingen (DE)
(72) Erfinder: Reuss, Matthias, 37083 Göttingen (DE)
(74) Vertreter: REHBERG HÜPPE + PARTNER

(56) Entgegenhaltungen:
- BENDA ALES ET AL: "Self-Calibrated Line-Scan STED-FCS to Quantify Lipid Dynamics in Model and Cell Membranes", BIOPHYSICAL JOURNAL, ELSEVIER, AMSTERDAM, NL, vol. 108, no. 3, 3 February 2015 (2015-02-03), pages 596 - 609, XP029198769, ISSN: 0006-3495, DOI: 10.1016/J.BPJ.2014.12.007
- GIUSEPPE VICIDOMINI ET AL: "STED Nanoscopy with Time-Gated Detection: Theoretical and Experimental Aspects", PLOS ONE, vol. 8, no. 1, 18 January 2013 (2013-01-18), pages e54421 - 1, XP055115463, DOI: 10.1371/journal.pone.0054421
- MAURO BUTTAFAVA ET AL: "SPAD-based asynchronous-readout array detectors for image-scanning microscopy", ARXIV.ORG, CORNELL UNIVERSITY LIBRARY, 201 OLIN LIBRARY CORNELL UNIVERSITY ITHACA, NY 14853, 26 February 2020 (2020-02-26), XP081608434

## Beschreibung

### TECHNISCHES GEBIET DER ERFINDUNG

Die Erfindung bezieht sich auf Verfahren zum Abbilden einer interessierenden Struktur einer Probe, bei denen Fluoreszenzanregungslicht und Fluoreszenzverhinderungslicht in einen Fokusbereich fokussiert werden.

Weiterhin bezieht sich die Erfindung auf Mikroskope mit einer Fluoreszenzanregungslicht und Fluoreszenzverhinderungslicht in einen Fokusbereich fokussierenden Beleuchtungseinrichtung.

Bei dem Fluoreszenzverhinderungslicht kann es sich insbesondere um so genanntes STED (Stimulated Emission Depletion)-Licht handeln, das so geformt wird, dass es in dem Fokusbereich ein zentrales Intensitätsminimum aufweist, während das Fluoreszenzanregungslicht so geformt wird, dass es im Zentrum des Fokusbereichs ein Intensitätsmaximum aufweist. Die Mikroskope können dann als STED-Mikroskope bezeichnet werden.

### STAND DER TECHNIK

Aus der WO 2012/069076 A1 ist ein Verfahren der STED-Fluoreszenzlichtmikroskopie bekannt, bei dem Fluoreszenzanregungslicht und STED-Licht in einem Fokusbereich fokussiert werden. Das Fluoreszenzanregungslicht wird in Form von Pulsen auf die Probe aufgebracht, während das STED-Licht kontinuierlich auf die Probe aufgebracht wird und eine Intensitätsnullstelle im Zentrum des Fokusbereichs aufweist. Von Fluorophoren aus dem Fokusbereich emittiertes Fluoreszenzlicht wird überlappend mit dem Aufbringen des STED-Lichts mit zeitlicher Auflösung zwischen aufeinanderfolgenden Pulsen des Fluoreszenzanregungslichts registriert. Die zeitliche Auflösung ist höher als eine Lebensdauer des angeregten Zustands der Fluorophore, wenn dieser sowohl durch die spontane Emission des Fluoreszenzlichts als auch durch die stimulierte Emission durch das STED-Licht abklingt. Konkret wird das Fluoreszenzlicht während zweier wechselweise aufeinander folgenden Zeiträume detektiert, wobei in den einen der Zeiträume der jeweilige Puls des Fluoreszenzanregungslichts fällt und der andere der Zeiträume in einem definierten Abstand zu dem jeweiligen Puls des Fluoreszenzanregungslichts folgt. Der andere der Zeiträume soll dann beginnen, wenn im Wesentlichen alle von dem jeweiligen Puls des Fluoreszenzanregungslichts angeregten Fluorophore in dem Fokusbereich außerhalb der Intensitätsnullstelle des STED-Lichts von dem STED-Licht wieder abgeregt wurden. Das in dem zweiten Zeitraum registrierte Fluoreszenzlicht kann daher den Fluorophoren zugeordnet werden, die sich genau in der Intensitätsnullstelle des STED-Lichts befinden.

Aus Giorgio Tortarolo et al., "Photon-separation to enhance the spatial resolution of pulsed STED microscopy", Nanoscale, 2019, 11, 1754-1761 ist es bekannt, eine als SPLIT (Separation by Lifetime Tuning) bezeichnete Technik auf STED-Mikroskopie mit gepulstem STED-Licht anzuwenden. Bei SPLIT wird durch Phasoranalyse des Intensitätsverlaufs des Fluoreszenzlichts nach den Pulsen des Fluoreszenzanregungs- und STED-Lichts ein Einfluss des STED-Lichts auf die Lebensdauer des angeregten fluoreszenten Zustands der zu dem Fluoreszenzlicht beitragenden Fluorophore im gemeinsamen Fokusbereich des Fluoreszenzanregungslichts und des STED-Lichts erfasst. Aus diesem Einfluss wird darauf geschlossen, ob sich diese Fluorophore im Zentrum des Fokusbereichs befinden, wo die Intensitätsverteilung des STED-Lichts ein Minimum aufweist, so dass der Einfluss des STED-Lichts minimal ist, oder außerhalb des Zentrums, wo der Einfluss des STED-Lichts mit zunehmendem Abstand zu dem Zentrum anwächst. Auch wenn mehrere, über den Fokusbereich verteilte Fluorophore zu dem Fluoreszenzlicht beitragen, kann darauf geschlossen werden, wie groß der Anteil der Fluorophore ist, die sich in dem Zentrum des Fokusbereichs befinden, und welchen Anteil sie zu dem Fluoreszenzlicht beitragen. Dadurch kann die Ortsauflösung, mit der die Verteilung der Fluorophore beim Abtasten mit dem gemeinsamen Fokusbereich des Fluoreszenzanregungslichts und des STED-Lichts erfasst wird, erhöht werden.

Aus Simone Pelicci et al., "Improving SPLIT-STED super-resolution imaging with tunable depletion and excitation power", J. Phys. D: Appl. Phys. 53 234003 (2020) ist es ebenfalls bekannt, die SPLIT-Technik in der STED-Mikroskopie einzusetzen, um zusätzliche Informationen über die Lage der zu dem registrierten Fluoreszenzlicht beitragenden Fluorophore in dem gemeinsamen Fokusbereich des Fluoreszenzanregungslichts und des STED-Lichts zu gewinnen.

Aus Marco Castello et al., "A robust and versatile platform for image scanning microscopy enabling super-resolution FLIM", Nature Methods, Brief Communication, https://doi.org/10.1038/s41592-018-0291-9, online publiziert am 14. Januar 2019, ist ein auf einem Einzelphotonendetektorarray basierendes Verfahren der ISM (Image Scanning Microscopy) bekannt, das super-auflösendes FLIM (Fluorescence Lifetime Imaging) ermöglicht. Anregungslicht wird in einen Fokusbereich fokussiert, und der Fokusbereich wird auf ein SPAD (Single-Photon-Avalanche-Diode)-Array abgebildet, mit dem das Fluoreszenzlicht aus dem Fokusbereich konfokal registriert wird. Mit den einzelnen Dioden des Arrays werden die Photonen des Fluoreszenzlichts einzeln registriert, und es wird Ihnen der Zeitpunkt ihrer Registrierung nach einem vorangegangenen Puls des Anregungslichts zugeordnet. Damit wird eine Bestimmung der Lebensdauer der das Fluoreszenzlicht emittierenden Fluorophore ermöglicht. Zugleich wird durch das Array der Dioden die Abbildung des Fokusbereichs mit räumlicher Auflösung abgetastet. Auch wenn der Abstand der Dioden des Arrays dabei bezogen auf den Fokusbereich kleiner als die Beugungsgrenze ist, werden zusätzliche räumliche Informationen gewonnen, so dass eine Abbildung einer Verteilung der Fluorophore mit höherer Auflösung als der Beugungsgrenze ermöglicht wird. Diese räumliche Auflösung wird aufgrund der Erfassung der genauen Zeiten, zu denen die einzelnen Photonen des Fluoreszenzlichts mit den einzelnen Dioden des Arrays registriert werden, auch bei der Abbildung einer räumlichen Verteilung der Lebensdauer des angeregten Zustands der Fluorophore erreicht.

Ales Benda et al.: "Self-Calibrated Line-Scan STED-FCS to Quantify Lipid Dynamics in Model and Cell Membranes", BIOPHYSICAL JOURNAL, ELSEVIER, AMSTERDAM, NL, Bd. 108, Nr. 3, 3. Februar 2015, Seiten 596-609 beschreiben ein Stimulated Emission Depletion combined with Fluorescence Correlation Spectroscopy (STED-FCS) genanntes Verfahren in einer Ausführungsform, bei der ein resonantes Linienscannen einer Probe mit fokussiertem Anregungslicht zusammen mit gefilterter FCS durchgeführt wird. Dabei werden einzelne aus der Probe emittierte Photonen der x-Position des Linienscanners und dem Zeitpunkt ihrer Registrierung zugeordnet. Zusätzlich wird dem jeweiligen Photon die Nummer eines Detektors zugeordnet, mit dem es detektiert wurde. Zu den Detektoren gelangen die Photonen durch eine Lochblende, wellenlängenselektive Filter und eine optische Faser. Bei der gefilterten FCS wird jedes Photon gemäß einem Filter gewichtet, das das Fluoreszenzlichtsignal von der Probe aufgrund seines zeitlichen Verlaufs in Anteile aus verschiedenen räumlichen Bereichen um das Zentrum des fokussierten Anregungslichts aufteilt.

Aus Mauro Buttafava et al.: "SPAD-based asynchronous-readout array detectors for imagescanning microscopy", ARXIV.ORG, CORNELL UNIVERSITY LIBRARY, 201 OLIN LIBRARY CORNELL UNIVERSITY ITHACA, NY 14853, 26. Februar 2020 ist die Verwendung von Single-Photon Avalanche Dioden (SPAD) in einem Array bekannt, auf das bei der Fluoreszenzlaserscanningmikroskopie eine Airy-Scheibe des Fluoreszenzlichts aus einer Probe abgebildet wird. Die mit den einzelnen SPAD registrierten Photonen entsprechen einzelnen Bildern einer mit Fluoreszenzfarbstoff in der Probe markierten Struktur. Diese einzelnen Bilder werden miteinander verrechnet, um ein Bild mit einem gegenüber einfacher konfokaler Registrierung des Fluoreszenzlichts aus der Probe erhöhten Signal zu erhalten.

### AUFGABE DER ERFINDUNG

Der Erfindung liegt die Aufgabe zugrunde, Verfahren und Mikroskope zum Abbilden einer interessierenden Struktur einer Probe, bei denen Fluoreszenzanregungslicht und Fluoreszenzverhinderungslicht in einen Fokusbereich fokussiert wird, aufzuzeigen, bei denen auf besonders einfache und genaue Weise berücksichtigt werden kann, aus welchem Bereich des Fokusbereichs Fluoreszenzlicht stammt, das mit einem Array von nebeneinander angeordneten Fluoreszenzlichtsensoren detektiert wird.

### LÖSUNG

Die Aufgabe der Erfindung wird durch Verfahren mit den Merkmalen der unabhängigen Patentansprüche 1 und 7 und durch Mikroskope mit den Merkmalen der unabhängigen Patentansprüche 11 und 15 gelöst. Die abhängigen Patentansprüche betreffen bevorzugte Ausführungsformen der erfindungsgemäßen Verfahren und der erfindungsgemäßen Mikroskope.

### BESCHREIBUNG DER ERFINDUNG

Den erfindungsgemäßen Verfahren zum Abbilden einer interessierenden Struktur einer Probe ist gemeinsam, dass Fluoreszenzanregungslicht und Fluoreszenzverhinderungslicht in einen Fokusbereich fokussiert werden, wobei das Fluoreszenzanregungslicht und/oder das Fluoreszenzverhinderungslicht in zeitlich beabstandeten Pulsen in den Fokusbereich gerichtet werden. Das heißt, zumindest das Fluoreszenzanregungslicht oder das Fluoreszenzverhinderungslicht ist gepulst. Wenn nur das Fluoreszenzanregungslicht oder das Fluoreszenzverhinderungslicht gepulst ist, ist in der Regel das Fluoreszenzanregungslicht gepulst. Es kann aber auch sowohl das Fluoreszenzanregungslicht als auch das Fluoreszenzverhinderungslicht gepulst sein. Bei dem Fluoreszenzverhinderungslicht kann es sich insbesondere um STED-Licht handeln. Grundsätzlich kann aber jedes Fluoreszenzverhinderungslicht zum Einsatz kommen, das abhängig von seiner Intensität die spontane Emission von durch das Fluoreszenzanregungslicht angeregten Fluorophoren verhindert. Vorzugsweise ist der der Fluoreszenzverhinderung zugrunde liegende Prozess ein schneller, so dass eine hohe Folgefrequenz der Pulse des Fluoreszenzanregungslichts und/oder des Fluoreszenzverhinderungslichts unter zwischenzeitlicher Rückkehr der Fluorophore in ihren Ausgangszustand realisiert werden kann. Weiterhin ist den erfindungsgemäßen Verfahren zum Abbilden einer interessierenden Struktur einer Probe gemeinsam, dass der Fokusbereich auf ein konfokal zu dem Fokusbereich angeordnetes Array von in mindestens einer Richtung nebeneinander angeordneten Fluoreszenzlichtsensoren abgebildet wird und dass der Fokusbereich an verschiedenen Relativpositionen gegenüber der Probe angeordnet wird. Das Array weist dabei in der mindestens einen Richtung typischerweise Abmessungen vom 1- bis 2-Fachen des Durchmessers einer Airyscheibe auf, in die der von dem Fluoreszenzanregungslicht ausgeleuchtete Fokusbereich auf das Array abgebildet wird. Günstig sind Abmessungen vom 1,1- bis 1,5-Fachen, d. h. vom etwa 1,2-Fachen des Durchmessers einer Airyscheibe. Typischerweise sind die Fluoreszenzlichtsensoren in zwei Richtungen nebeneinander angeordnet, beispielsweise in einem quadratischen oder hexagonalen Muster. Das Anordnen des Fokusbereichs an den verschiedenen Relativpositionen der Probe kann mit dem Ziel des lückenlosen Abtastens zumindest eines Teilbereichs der Probe erfolgen. Der Fokusbereich kann aber auch an weniger dichten Relativpositionen gegenüber der Probe angeordnet werden. An jeder der Relativpositionen gegenüber der Probe werden das Fluoreszenzanregungslicht und das Fluoreszenzverhinderungslicht in den Fokusbereich gerichtet. An jeder der Relativpositionen gegenüber der Probe kann das Fluoreszenzanregungslicht bzw. das Fluoreszenzverhinderungslicht in nur einem Puls in den Fokusbereich gerichtet werden. Typischerweise wird jedoch eine Vielzahl von Pulsen in den Fokusbereich gerichtet, bevor die Relativposition des Fokusbereichs gegenüber der Probe gewechselt wird. Dies gilt auch bei einem kontinuierlichen Abtasten der Probe, d. h. bei einem kontinuierlichen Verlagern des Fokusbereichs gegenüber der Probe bei einer verglichen mit der Geschwindigkeit des Verlagerns hohen Folgefrequenz der Pulse. Auch dann entfallen mehrere Pulse auf jede der einzeln betrachteten Relativpositionen des Fokusbereichs gegenüber der Probe.

Während des Anordnens wird bei allen erfindungsgemäßen Verfahren Fluoreszenzlicht mit den einzelnen Fluoreszenzlichtsensoren detektiert und der jeweiligen Relativposition des Fokusbereichs, während der es detektiert wurde, zugeordnet. Hier und an anderen Stellen dieser Beschreibung wird die Angabe, dass etwas zugeordnet wird, so verstanden, dass die beiden genannten Objekte miteinander verknüpft werden. Dass dabei das eine Objekt dem anderen Objekt zugeordnet wird, soll dabei keine spezielle Richtung der Verknüpfung angeben. Vielmehr soll es grundsätzlich gleichbedeutend sein, wenn das andere Objekt dem einen Objekt zugeordnet wird. Das Zuordnen des jeweiligen Fluoreszenzlichts zu der jeweiligen Relativposition des Fokusbereichs kann konkret bedeuten, dass das Fluoreszenzlicht mit einer Markierung versehen wird, die die jeweilige Relativposition anzeigt oder das Fluoreszenzlicht in einer Tabelle unter der jeweiligen Relativposition eingetragen wird. Weitere konkrete Umsetzungen der Zuordnung sind möglich. Es können auch mehrere derartige Umsetzungen parallel erfolgen.

Bei dem erfindungsgemäßen Verfahren nach Patentanspruch 1 wird das jeweilige Fluoreszenzlicht zusätzlich dem jeweiligen Fluoreszenzlichtdetektor zugeordnet, mit dem es detektiert wurde, und eine Zeit nach den einzelnen Pulsen, zu der das jeweilige Fluoreszenzlicht mit dem jeweiligen Fluoreszenzlichtdetektor detektiert wird, wird registriert und dem jeweiligen Fluoreszenzlicht zugeordnet. Das Fluoreszenzlicht wird also beispielsweise neben einer Markierung, die die jeweilige Relativposition des Fokusbereichs gegenüber der Probe angibt, mit zusätzlichen Markierungen versehen, die den jeweiligen Fluoreszenzlichtsensor und die Zeit angeben, mit dem bzw. zu der das Fluoreszenzlicht detektiert wurde. Dabei ist die entscheidende Größe der Zeit der zeitliche Abstand zu den letzten Pulsen des Fluoreszenzanregungslichts und/oder des Fluoreszenzverhinderungslichts. Wenn ein Puls des Fluoreszenzverhinderungslichts auf einen Puls des Fluoreszenzanregungslichts folgt oder wenn das Fluoreszenzverhinderungslicht über mehrere Pulse des Fluoreszenzanregungslichts hinweg kontinuierlich auf die Probe gerichtet wird, kann der Beginn des Pulses des Fluoreszenzanregungslichts als jeweiliger Bezugspunkt der Zeit verwendet werden. Bei periodisch aufeinander folgenden Pulsen kann aber auch ein Puls des Fluoreszenzanregungslichts oder des Fluoreszenzverhinderungslichts, der keinen unmittelbaren Einfluss auf das detektierte Fluoreszenzlicht hat, weil ihm bereits ein weiterer Puls des Fluoreszenzanregungslichts oder des Fluoreszenzverhinderungslichts folgte oder weil er erst nach dem Detektieren des Fluoreszenzlichts auf die Probe gerichtet wird, als jeweiliger Bezugspunkt der Zeit verwendet werden

Anhand des Fluoreszenzlichtsensors, mit dem das jeweilige Fluoreszenzlicht detektiert wurde, und anhand der Zeit, zu der das jeweilige Fluoreszenzlicht detektiert wurde, wird ein Gewichtungsfaktor festgelegt, mit dem das jeweilige Fluoreszenzlicht in eine Fluoreszenzlichtsumme eingeht, die der jeweiligen Relativposition des Fokusbereichs gegenüber der Probe zugeordnet wird. Der Gewichtungsfaktor kann insbesondere zwischen 0 und 1 festgelegt werden, d. h. zwischen keiner und vollständiger Berücksichtigung des jeweiligen Fluoreszenzlichts bei der Bildung der Fluoreszenzlichtsumme. Bei der Festlegung des Gewichtungsfaktors wird sowohl berücksichtigt, wo innerhalb des Arrays das Fluoreszenzlicht auf den jeweiligen Fluoreszenzlichtsensor gefallen ist, als auch berücksichtigt, zu welchem Zeitpunkt dies stattgefunden hat. Dies basiert z. B. auf der Überlegung, dass ein Fluoreszenzlichtsensor im Zentrum des Arrays geometrisch stärker einem Zentrum des Fokusbereichs zugeordnet ist, als weiter außerhalb des Zentrums des Arrays liegende Fluoreszenzlichtsensoren. Wenn dann beispielsweise eine Intensitätsverteilung des Fluoreszenzverhinderungslichts ein zentrales Intensitätsminimum in dem Fokusbereich aufweist, sprechen die Fakten, dass der zentrale Fluoreszenzlichtsensor geometrisch stärker dem Zentrum des Fokusbereichs zugeordnet ist und dort der Einfluss des Fluoreszenzverhinderungslichts sowieso gering ist, dafür, das mit dem zentralen Fluoreszenzlichtsensor registrierte Fluoreszenzlicht der Fluoreszenzlichtsumme mit maximalem Gewichtungsfaktor zuzuschlagen. Bei außerhalb des Zentrums des Arrays angeordneten Fluoreszenzlichtsensoren, die einem außerhalb des Zentrums angeordneten Teil des Fokusbereichs zugeordnet ist, ist es hingegen sinnvoll, nur Fluoreszenzlicht voll zu gewichten, das relativ spät registriert wird, also nachdem das Fluoreszenzverhinderungslicht alle Fluorophore in dem Teil des Fokusbereichs abgeregt hat, und daher mit hoher Wahrscheinlichkeit aus dem Zentrum des Fokusbereichs stammt.

Statt sich von derartigen theoretischen Überlegungen leiten zu lassen, können zusätzlich zu der Zeit, zu der das jeweilige Fluoreszenzlicht detektiert wurde, auch die Zeiten, zu denen das gesamte Fluoreszenzlicht während der jeweiligen Relativposition des Fokusbereichs mit dem jeweiligen Fluoreszenzlichtsensor detektiert wurde, bei der Festlegung des Gewichtungsfaktors für das jeweilige Fluoreszenzlicht berücksichtigt werden. Der Verlauf der Intensität des mit dem jeweiligen Fluoreszenzlichtdetektor detektierten Fluoreszenzlichts über der Zeit lässt erkennen, welche Anteile dieses Fluoreszenzlichts von dem Fluoreszenzverhinderungslicht beeinflusst werden und daher in dem Beispiel mit dem zentralen Intensitätsminimum des Fluoreszenzverhinderungslichts aus dezentralen Bereichen des Fokusbereichs stammen, und welche Anteile nicht von dem Fluoreszenzverhinderungslicht abhängig sind und deshalb aus dem Zentrum des Fokusbereichs und dem dortigen Intensitätsminimum des Fluoreszenzverhinderungslichts stammen sollten. Diese Anteile des Fluoreszenzlichts haben den höchsten Informationsgehalt bezüglich der Konzentration der Fluorophore in dem Zentrum des Fokusbereichs.

An dieser Stelle sei aber ausdrücklich betont, dass die Erfindung nicht auf Intensitätsverteilungen des Fluoreszenzverhinderungslichts in dem Fokusbereich mit zentralem Intensitätsminimum beschränkt ist, selbst wenn es sich hierbei um eine wesentliche Ausführungsform der vorliegenden Erfindung handelt. Aufgrund des Fokussierens des Fluoreszenzverhinderungslichts in den Fokusbereich wird jede Intensitätsverteilung des Fluoreszenzverhinderungslichts in dem Fokusbereich einen Gradienten aufweisen. Dieser räumliche Gradient ist die Grundlage bei den erfindungsgemäßen Verfahren dafür, dass durch Berücksichtigung, mit welchem der Fluoreszenzlichtsensoren das Fluoreszenzlicht zu welchem Zeitpunkt registriert wurde, zusätzliche Informationen zu dem Ort seiner Emission innerhalb des Fokusbereichs ermittelt werden können.

Beim Festlegen des Gewichtungsfaktors können weiterhin die Zeiten berücksichtigt werden, zu denen das gesamte Fluoreszenzlicht während der jeweiligen Relativposition des Fokusbereichs mit der Gesamtheit der Fluoreszenzlichtsensoren des Arrays detektiert wurde. Insbesondere aus den relativen zeitlichen Verläufen des mit den einzelnen Fluoreszenzlichtsensoren des Arrays registrierten Fluoreszenzlichts können weitere Rückschlüsse auf den Ursprung des Fluoreszenzlichts, d. h. den Ort seiner Emission innerhalb des Fokusbereichs gezogen werden.

Durch das Festlegen des Gewichtungsfaktors für das jeweilige Fluoreszenzlicht kann implementiert werden, dass für jeden der Fluoreszenzlichtsensoren ein Beginn eines effektiven Detektionszeitraums individuell derart festgelegt wird, dass das jeweilige Fluoreszenzlicht in die Fluoreszenzlichtsumme eingeht, wenn es während dem effektiven Detektionszeitraum detektiert wurde.

Das Merkmal des hier näher beschriebenen erfindungsgemäßen Verfahrens, dass die Zeit nach den einzelnen Pulsen, zu der das jeweilige Fluoreszenzlicht mit dem jeweiligen Fluoreszenzlichtsensor detektiert wird, registriert und dem jeweiligen Fluoreszenzlicht zugeordnet wird, setzt zumindest voraus, dass registriert wird, binnen welcher von mindestens zwei vordefinierten, nicht vollständig überlappenden Zeitspannen nach den einzelnen Pulsen das Fluoreszenzlicht mit dem jeweiligen Fluoreszenzlichtsensor detektiert wird, und dass die jeweilige Zeitspanne dem detektierten Fluoreszenzlicht zugeordnet wird. Vorzugsweise überlappen die Zeitspannen nicht, sondern folgen aufeinander.

Maximale Informationen werden erhalten, wenn für jedes Photon des Fluoreszenzlichts ein Zeitpunkt nach den einzelnen Pulsen, zu dem es mit dem jeweiligen Fluoreszenzlichtsensor detektiert wird, registriert und dem jeweiligen Photon zugeordnet wird. Die Photonen können dann später mehreren Zeitspannen zugeordnet werden, wobei eine freie Definition der Zeitspannen möglich ist.

Bei dem erfindungsgemäßen Verfahren nach Patentanspruch 7, bei dem während des Anordnens Fluoreszenzlicht mit den einzelnen Fluoreszenzlichtsensoren während eines begrenzten Detektionszeitraums nach den einzelnen Pulsen detektiert wird und das jeweilige Fluoreszenzlicht der jeweiligen Relativposition des Fokusbereichs, während der es detektiert wurde, zugeordnet wird, wird ein Beginn des Detektionszeitraums für jeden oder zumindest mehrere Gruppen der Fluoreszenzlichtsensoren individuell und damit regelmäßig auf unterschiedliche Zeitpunkte festgelegt. Jede der mehreren Gruppen umfasst dabei mindestens einen der Fluoreszenzlichtsensoren. Bei diesem erfindungsgemäßen Verfahren werden sehr viel weniger Daten erzeugt und sind entsprechend auch sehr viel weniger Daten zu handhaben. Bei grundsätzlich gleichbleibenden Verhältnissen beim Abbilden interessierender Strukturen, einschließlich der Eigenschaften der Fluorophore, mit denen die Strukturen markiert sind, kann dennoch der Vorteil des erfindungsgemäßen Verfahrens einer verbesserten Zuordnung der jeweiligen Relativposition des Fokusbereichs zugeordneten Fluoreszenzlichts zu bestimmten Teilen des Fokusbereichs realisiert werden.

Das Detektieren des Fluoreszenzlichts mit den einzelnen Fluoreszenzlichtsensoren des Arrays nur während des jeweiligen begrenzten Detektionszeitraums nach den einzelnen Pulsen kann dadurch realisiert werden, dass die Fluoreszenzlichtsensoren des Arrays nur während des jeweiligen Detektionszeitraums nach den einzelnen Pulsen für das Fluoreszenzlicht empfindlich gehalten werden oder dass ein Fluoreszenzlichtsignal von den Fluoreszenzlichtsensoren nur für das Fluoreszenzlicht erfasst wird, das während des jeweiligen Detektionszeitraums nach den einzelnen Pulsen auf die Fluoreszenzlichtsensoren des Arrays fällt, oder dass das Fluoreszenzlichtsignal nur für das Fluoreszenzlicht ausgegeben wird, das während des jeweiligen Detektionszeitraums nach den einzelnen Pulsen auf die Fluoreszenzlichtsensoren des Arrays fällt. In jedem dieser Fälle wird die vorteilhafte starke Datenreduktion erreicht.

Konkret kann ein zeitlicher Abstand zwischen den einzelnen Pulsen und dem Beginn des Detektionszeitraums für den jeweiligen Fluoreszenzlichtsensor längs eines geometrisch auf das Array abgebildeten Gradienten einer Intensität des Fluoreszenzverhinderungslichts in dem Fokusbereich zunehmen. Dies kann insbesondere dann sinnvoll sein, wenn die Intensitätsverteilung des Fluoreszenzverhinderungslichts ein zentrales Minimum in dem Fokusbereich aufweist und/oder soweit die Intensitätsverteilung des Fluoreszenzverhinderungslichts eine Sättigungsintensität in Bezug auf die Fluoreszenzverhinderung nicht überschreitet. Insbesondere in diesem Fall kann der Beginn des Detektionszeitraums jeweils für die Fluoreszenzlichtsensoren einer solchen Gruppe gleich festgelegt werden, auf deren Fluoreszenzlichtsensoren bei einer geometrischen Abbildung der Intensitätsverteilung des Fluoreszenzverhinderungslichts in dem Fokusbereichs auf das Array gleiche Intensitäten abgebildet werden. Die Fluoreszenzlichtsensoren jeder solchen Gruppe können auf einem Ring um das Zentrum des Arrays angeordnet sein. Konkret kann für eine erste Gruppe aus einem oder mehreren der Fluoreszenzlichtsensoren im Zentrum des Arrays der Beginn des Detektionszeitraum früher festgelegt werden als für eine zweite Gruppe aus mehreren der Fluoreszenzlichtsensoren auf einem Ring um das Zentrum des Arrays.

Bei den erfindungsgemäßen Verfahren kann das Fluoreszenzanregungslicht so geformt werden, dass es ein zentrales Intensitätsmaximum in dem Fokusbereich aufweist, während das Fluoreszenzverhinderungslicht, wie bereits mehrfach angesprochen wurde, so geformt wird, dass es ein zentrales Intensitätsminimum in dem Fokusbereich aufweist.

Alle erfindungsgemäßen Mikroskope weisen eine Beleuchtungseinrichtung, eine Detektionseinrichtung und eine Positioniereinrichtung auf. Die Beleuchtungseinrichtung fokussiert Fluoreszenzanregungslicht und Fluoreszenzverhinderungslicht in einen Fokusbereich, wobei die Beleuchtungseinrichtung das Fluoreszenzanregungslicht und/oder das Fluoreszenzverhinderungslicht in zeitlich beabstandeten Pulsen in den Fluoreszenzbereich richtet. Die Detektionseinrichtung bildet den Fokusbereich auf ein Array von in mindestens einer Richtung nebeneinander angeordneten Fluoreszenzlichtsensoren ab. Typischerweise sind die Fluoreszenzlichtsensoren wieder in zwei Richtungen nebeneinander angeordnet. Die Positioniereinrichtung ordnet den Fokusbereich an verschiedenen Relativpositionen gegenüber einem Probenhalter des Mikroskops an. An jeder der Relativpositionen gegenüber der Probe richtet die Beleuchtungseinrichtung das Fluoreszenzanregungslicht und das Fluoreszenzverhinderungslicht in den Fokusbereich. Die Detektionseinrichtung ist dazu eingerichtet, mit den einzelnen Fluoreszenzlichtsensoren Fluoreszenzlicht zu detektieren und der jeweiligen Relativposition des Fokusbereichs, während der es detektiert wurde, zuzuordnen.

Bei dem erfindungsgemäßen Mikroskop nach Anspruch 11 ist die Detektionseinrichtung weiterhin dazu eingerichtet, das jeweilige Fluoreszenzlicht dem jeweiligen Fluoreszenzlichtsensor, mit dem es detektiert wurde, zuzuordnen und eine Zeit nach den einzelnen Pulsen, zu der das jeweilige Fluoreszenzlicht mit dem jeweiligen Fluoreszenzlichtsensor detektiert wird, zu registrieren und dem jeweiligen Fluoreszenzlicht zuzuordnen. Weiterhin ist die Detektionseinrichtung dazu eingerichtet, der jeweiligen Relativposition des Fokusbereichs eine Fluoreszenzlichtsumme zuzuordnen, in die das jeweilige Fluoreszenzlicht mit einem anhand des Fluoreszenzlichtsensors, mit dem das jeweilige Fluoreszenzlicht detektiert wurde, und anhand der Zeit, zu der das jeweilige Fluoreszenzlicht detektiert wurde, festgelegten Gewichtungsfaktor eingeht. Der Gewichtungsfaktor kann von der Detektionseinrichtung individuell berechnet oder beispielsweise aus einer Nachschlagetabelle entnommen werden.

Dabei kann die Detektionseinrichtung konkret dazu eingerichtet sein, zu registrieren, binnen welcher von mehreren vordefinierten, nicht vollständig überlappenden Zeitspannen nach den einzelnen Pulsen das Fluoreszenzlicht mit dem jeweiligen Fluoreszenzlichtsensor detektiert wird, und die jeweilige Zeitspanne dem detektierten Fluoreszenzlicht zuordnen. Auch hier überlappen die Zeitspannen vorzugsweise nicht, sondern folgen direkt aufeinander.

Alternativ kann die Detektionseinrichtung dazu eingerichtet sein, für jedes Photon des Fluoreszenzlichts einen Zeitpunkt nach den einzelnen Pulsen, zu dem es mit dem jeweiligen Fluoreszenzlichtsensor detektiert wird, zu registrieren und dem jeweiligen Photon zuzuordnen.

Bei dem erfindungsgemäßen Mikroskop nach Anspruch 15 ist die Detektionseinrichtung dazu eingerichtet, das Fluoreszenzlicht mit den einzelnen Fluoreszenzlichtsensoren selektiv während eines Detektionszeitraums nach den einzelnen Pulsen zu detektieren. Dabei ist ein Beginn des Detektionszeitraums für jeden oder zumindest für mehrere Gruppen der Fluoreszenzlichtsensoren individuell festlegbar oder für die Fluoreszenzlichtsensoren des Arrays auf verschiedene Werte festgelegt.

Das selektive Detektieren des Fluoreszenzlichts mit den einzelnen Fluoreszenzlichtsensoren des Arrays während des jeweiligen Detektionszeitraums nach den einzelnen Pulsen kann dadurch realisiert sein, dass die Fluoreszenzlichtsensoren des Arrays nur während des jeweiligen Detektionszeitraums nach den einzelnen Pulsen für das Fluoreszenzlicht empfindlich sind oder dass von der Detektionseirichtung ein Fluoreszenzlichtsignal von den Fluoreszenzlichtsensoren nur für das Fluoreszenzlicht erfasst wird, das während des jeweiligen Detektionszeitraums nach den einzelnen Pulsen auf die Fluoreszenzlichtsensoren des Arrays fällt, oder dass von der Detektionseirichtung das Fluoreszenzlichtsignal nur für das Fluoreszenzlicht ausgegeben wird, das während des jeweiligen Detektionszeitraums nach den einzelnen Pulsen auf die Fluoreszenzlichtsensoren des Arrays fällt.

Die erfindungsgemäßen Mikroskope sind weiterhin vorzugsweise dazu ausgebildet, die bevorzugten Merkmale der erfindungsgemäßen Verfahren zu realisieren.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Fokusbereich die Rede ist, ist dies so zu verstehen, dass genau ein Fokusbereich, zwei Fokusbereiche oder mehr Fokusbereiche vorhanden sind, in die das Fluoreszenzanregungslicht und das Fluoreszenzverhinderungslicht fokussiert werden. Die in den Patentansprüchen angeführten Merkmale können durch weitere Merkmale ergänzt werden oder die einzigen Merkmale sein, die das jeweilige Verfahren oder Mikroskop aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein erfindungsgemäßes Mikroskop.
- **Fig. 2**: ist eine Prinzipdarstellung einer ersten Ausführungsform eines Arrays von Fluoreszenzlichtsensoren des Mikroskops gemäß Fig. 1.
- **Fig. 3**: ist eine Prinzipdarstellung einer zweiten Ausführungsform eines Arrays von Fluoreszenzlichtsensoren des Mikroskops gemäß Fig. 1.
- **Fig. 4**: ist ein Blockdiagramm eines erfindungsgemäßen Verfahrens.
- **Fig. 5**: zeigt eine zeitliche Abfolge von Pulsen von Anregungslicht und Fluoreszenzverhinderungslicht und zugehörigen Zeiträumen, in denen Fluoreszenzlicht mit den Fluoreszenzlichtsensoren detektiert wird.
- **Fig. 6**: ist eine Auftragung eines Quotienten der in den Zeiträumen gemäß Fig. 5 registrierten Lichtintensitätsmengen für eine Intensitätsverteilung des Fluoreszenzverhinderungslichts mit zentralem Intensitätsminimum über das Array von Lichtintensitätssensoren.
- **Fig. 7**: ist eine Auftragung eines aus Fig. 6 abgeleiteten Gewichtungsfaktors für das mit den einzelnen Fluoreszenzlichtsensoren des Arrays detektierte Fluoreszenzlicht.
- **Fig. 8**: stellt die Verteilung der Intensität des bei dem erfindungsgemäßen Verfahren registrierten Fluoreszenzlichts über dem Array von Fluoreszenzlichtsensoren den Verteilungen bei zwei Verfahren des Stands der Technik gegenüber.

### FIGURENBESCHREIBUNG

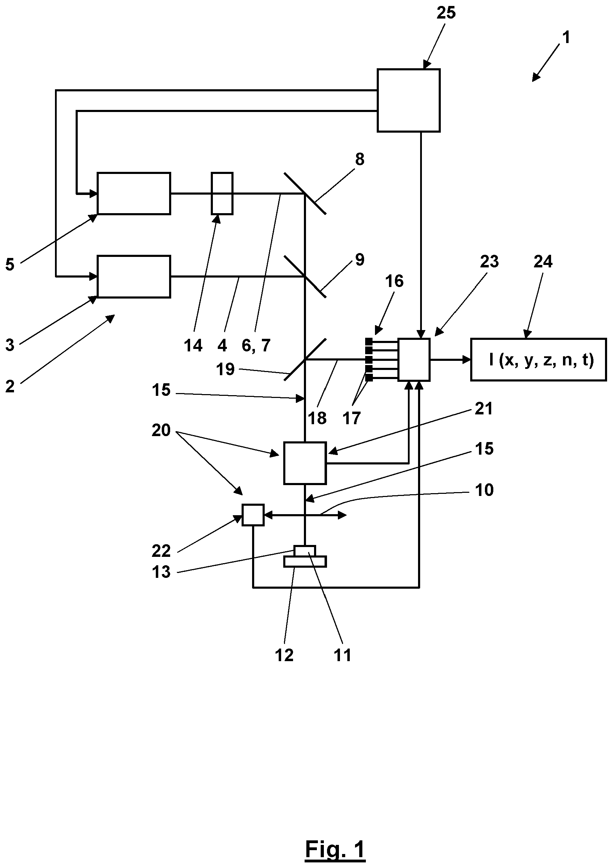

Das in **Fig. 1** schematisch dargestellte Mikroskop 1 weist eine Beleuchtungseinrichtung 2 auf. Die Beleuchtungseinrichtung 2 umfasst eine Anregungslichtquelle 3 für Anregungslicht 4 und eine Fluoreszenzverhinderungslichtquelle 5 für Fluoreszenzverhinderungslicht 6. Das Anregungslicht regt Fluorophore in einen Zustand an, aus dem heraus sie Fluoreszenzlicht 18 emittieren. Bei dem Fluoreszenzverhinderungslicht 6 kann es sich insbesondere um STED-Licht 7 handeln, das Fluorophore aus dem mit dem Anregungslicht 4 angeregten Zustand durch stimulierte Emission wieder abregt. Mit Hilfe eines Spiegels 8 und eines halbdurchlässigen Spiegels 9 werden das Anregungslicht 4 und das Fluoreszenzverhinderungslicht 6 zusammengeführt und dann mit einem Objektiv 10 in einen gemeinsamen Fokusbereich 11 in einer auf einem Probenhalter 12 angeordneten Probe 13 fokussiert. Dabei bildet das Fluoreszenzanregungslicht 4 in dem Fokusbereich 11 ein zentrales Intensitätsmaximum aus, während das Fluoreszenzverhinderungslicht 6 aufgrund seiner Formung mit einem Strahlformungsmittel 14 eine Intensitätsverteilung mit einem zentralen Intensitätsminimum in dem Fokusbereich 11 ausbildet. Das Strahlformungsmittel 14 kann in bekannter Weise als Phasenplatte, beispielsweise als so genannte Phasenuhr ausgebildet sein. Ein sich zwischen einem halbdurchlässigen Spiegel 19 und dem Fokusbereich 11 erstreckender Strahlengangabschnitt 15, in dem das Objektiv 10 angeordnet ist, ist nicht nur Teil der Beleuchtungseinrichtung 2, sondern auch einer Detektionseinrichtung 23, die den Fokusbereich 11 über den das Fluoreszenzlicht 18 aus dem Fokusbereich 11 ablenkenden halbdurchlässigen Spiegel 19 auf ein Array 16 von Fluoreszenzlichtsensoren 17 abbildet. Weiterhin umfasst das Mikroskop 1 eine Positioniereinrichtung 20 mit einem typischerweise Drehspiegel umfassenden x/y-Scanner 21 und einem auf das Objektiv 10 einwirkenden z-Scanner 22. Die Positioniereinrichtung 20 positioniert den Fokusbereich 11 gegenüber dem Probenhalter 12 in der Probe 13. Da die Positioniereinrichtung 20 sowohl in dem Strahlengang des Fluoreszenzanregungslichts 4 und des Fluoreszenzverhinderungslichts 6 als auch in dem Strahlengang des Fluoreszenzlichts 18 angeordnet ist, wird der Fokusbereich 11 unabhängig von seiner Lage in der Probe 13 immer auf das konfokal zu dem Fokusbereich 11 angeordnete Array 16 abgebildet. Die Detektionseinrichtung 23 detektiert das Fluoreszenzlicht 18 aus dem Fokusbereich 11 mit den einzelnen Fluoreszenzlichtsensoren 17. Die Detektionseinrichtung 23 gibt ein Fluoreszenzlichtsignal 24 aus, das neben der Intensität I des Fluoreszenzlichts 18 die Relativposition des Fokusbereichs 11, hier in Form von x, y, z-Koordinaten angedeutet, den jeweiligen Fluoreszenzlichtsensor 17, hier mit dessen Nummer n angedeutet, und den Zeitpunkt des Detektierens des Fluoreszenzlichts 18, hier mit t angedeutet, umfasst. Dazu ist die Detektionseinrichtung 23 mit den Scannern 21 und 22 der Positioniereinrichtung 20 und einer Steuerungseinheit 25 verbunden. Die Steuerungseinheit 25 gibt die Zeitpunkte von Pulsen vor, in denen das Fluoreszenzanregungslicht 4 und das Fluoreszenzverhinderungslicht 6 in die Probe 13 gerichtet werden. Die Angabe t zu dem Zeitpunkt des Detektierens des Fluoreszenzlichts 18 bezieht sich auf die Zeit nach den einzelnen Pulsen.

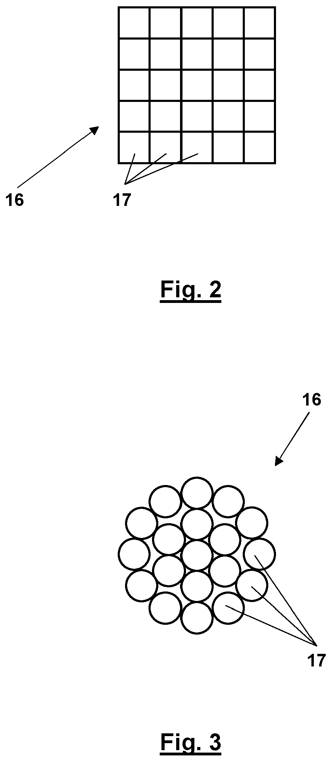

**Fig. 2** zeigt schematisch eine Ausführungsform des Arrays 16 mit den Fluoreszenzlichtsensoren 17 in quadratischer Anordnung. **Fig. 3** zeigt im Vergleich dazu eine andere Ausführungsform des Arrays 16, bei dem die Fluoreszenzlichtsensoren 17 auf konzentrischen Ringen und dabei in einer in etwa hexagonalen Anordnung angeordnet sind. Der jeweils zentrale Fluoreszenzlichtsensor 17 des Arrays 16 ist geometrisch dem Zentrum des Fokusbereichs 11 mit dem Intensitätsminimum des Fluoreszenzverhinderungslichts 6 zugeordnet, auf das das Fluoreszenzverhinderungslicht 6 den Teil des Fokusbereichs 11 einengen soll, aus welchem das detektierte Fluoreszenzlicht 18 idealerweise ausschließlich stammt. Die weiteren Fluoreszenzlichtsensoren 17 sind geometrisch außerhalb des Zentrums des Fokusbereichs 11 liegenden Teilen des Fokusbereichs 11 zugeordnet. Aufgrund der Beugungsgrenze fällt aber auch Fluoreszenzlicht 18 aus dem Zentrum des Fokusbereichs 11 auf die außerhalb des Zentrums des Arrays 16 liegenden Fluoreszenzlichtsensoren 17 und wird von diesen detektiert. Ebenso fällt Fluoreszenzlicht 18 von außerhalb des Zentrums des Fokusbereichs 11 auf den im Zentrum des Arrays 16 liegenden Fluoreszenzlichtsensor 17 projiziert und wird von diesem detektiert.

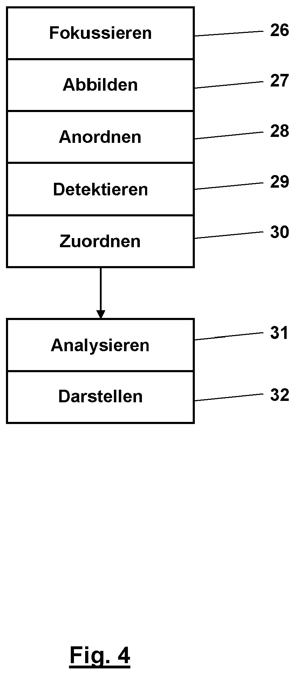

Das Blockdiagramm gemäß **Fig. 4** zeigt auf, dass verschiedene Schritte des erfindungsgemäßen Verfahrens, welches mit dem Mikroskop 1 gemäß Fig. 1 ausgeführt wird, parallel ablaufen. Parallel erfolgt das Fokussieren 26 des Fluoreszenzanregungslichts 4 und des Fluoreszenzverhinderungslichts 6 in den Fokusbereich, das Abbilden 27 des Fokusbereichs 11 auf das Array 16, das Anordnen 28 des Fokusbereichs 11 an verschiedenen Relativpositionen gegenüber der Probe 13, das Detektieren 29 des Fluoreszenzlichts 18 aus dem Fokusbereich 11 mit den Fluoreszenzlichtsensoren 17 des Arrays 16 und das Zuordnen 30 des Fluoreszenzlichts 18 zu der jeweiligen Relativposition des Fokusbereichs 11 in der Probe 13, zu dem jeweiligen Fluoreszenzlichtsensor 17, mit dem es detektiert wurde, und zu dem Zeitpunkt, zu dem es detektiert wurde. Hiervon zeitlich abgesetzt können dann die Schritte Analysieren 31 des Fluoreszenzlichtsignals 24 und Darstellen 32 einer interessierenden Struktur der Probe 13 erfolgen.

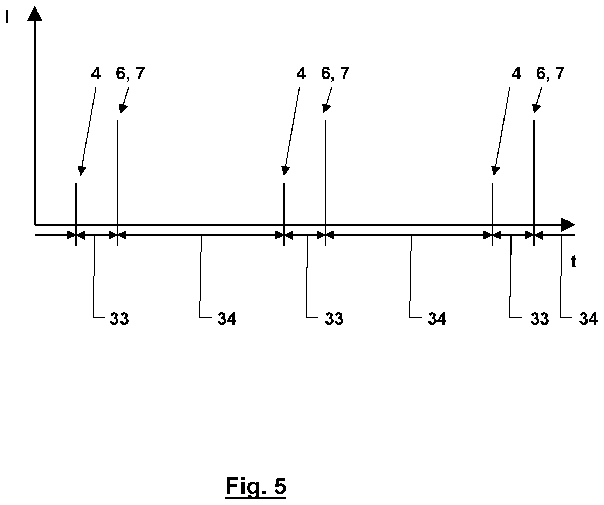

**Fig. 5** zeigt wiederum schematisch die zeitliche Abfolge von Pulsen des Fluoreszenzanregungslichts 4 und nachfolgenden Pulsen des Fluoreszenzverhinderungslichts 6 in Form von STED-Licht 7. Dazu sind Zeitspannen 33 und 34 dargestellt, die ebenso wie die Pulse des Fluoreszenzanregungslichts 4 und des Fluoreszenzverhinderungslichts 6 regelmäßig wiederkehren. Die Zeitspanne 33 beginnt jeweils mit dem Beginn des Pulses des Fluoreszenzanregungslichts 4 und endet mit dem Ende des darauf folgenden Pulses des Fluoreszenzverhinderungslichts 6. Hieran schließt sich die Zeitspanne 34 an, die dann endet, wenn die nächste Zeitspanne 33 beginnt. Der Zeitpunkt, zu dem das Fluoreszenzlicht 18 detektiert wird, wird bei einer Ausführungsform des erfindungsgemäßen Verfahrens registriert, und zwar dahingehend, ob das Fluoreszenzlicht 18 in die Zeitspanne 33 oder die Zeitspanne 34 fällt. Die relativen Anteile des Fluoreszenzlichts 18, die in die Zeitspannen 33 und 34 fallen, zeigen an, ob die Fluorophore, die dieses Fluoreszenzlicht 18 emittiert haben, stark von dem Fluoreszenzverhinderungslicht 6 beeinflusst wurden, weil dessen Intensität am Ort der Fluorophore hoch war, oder nicht. Wenn der Anteil des Fluoreszenzlichts 18 in der Zeitspanne 34 gegenüber dem Anteil des Fluoreszenzlichts 18 in der Zeitspanne 33 sehr klein ist, sind die entsprechenden Fluorophore hohen Intensitäten des Fluoreszenzverhinderungslichts 6 ausgesetzt gewesen. Bei vergleichsweise großen relativen Anteilen des Fluoreszenzlichts 18 in der Zeitspanne 34 verglichen mit der Zeitspanne 33 sind die entsprechenden Fluorophore nur geringeren Intensitäten des Fluoreszenzverhinderungslichts 6 ausgesetzt gewesen. Bei einer Intensitätsverteilung des Fluoreszenzverhinderungslichts 6 mit zentralem Minimum bedeutet Letzteres, dass die Fluorophore, die das Fluoreszenzlicht 18 emittiert haben, in dem Zentrum des Fokusbereichs 11 angeordnet sind, und zwar unabhängig davon, wo der jeweilige Fluoreszenzlichtsensor 17 angeordnet ist, mit dem das Fluoreszenzlicht 18 detektiert wurde.

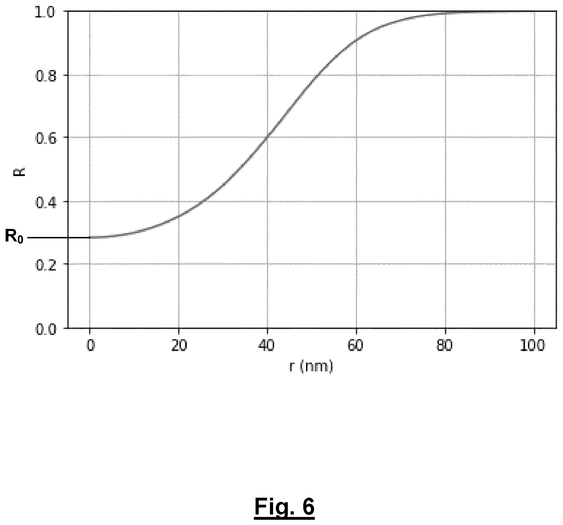

**Fig. 6** ist eine Auftragung eines Quotienten R = I₀/ (I₀ + I₁), wobei I₀ die Lichtmenge des Fluoreszenzlichts 18 in dem Zeitraum 33 und I₁ die Lichtmenge des Fluoreszenzlichts 18 in dem Zeitraum 34 ist. Aufgetragen ist der Quotient R über dem Radius r in Nanometern unter der Annahme eines Intensitätsminimums des Fluoreszenzverhinderungslichts 6 mit einem Radius von 50 nm und einer homogenen Verteilung der Fluorophore über den Fokusbereich 11. Dabei kann sich der Radius auf den Bereich des Intensitätsminimums bis zur Hälfte einer Sättigungsintensität des Fluoreszenzverhinderungslichts 6 beziehen. Der Quotient R nimmt Werte zwischen R₀ von typischerweise $\frac{1}{3}$ und 1 an. Dabei weisen die kleineren Werte von R₀ darauf hin, dass die Fluorophore, die das Fluoreszenzlicht 18 emittiert haben, in dem Zentrum des Fokusbereichs 11 mit dem Intensitätsminimum des Fluoreszenzverhinderungslichts 6 angeordnet sind, während R = 1 darauf hinweist, dass sich die entsprechenden Fluorophore außerhalb dieses Zentrums befinden, so dass I₁ gegen 0 strebt.

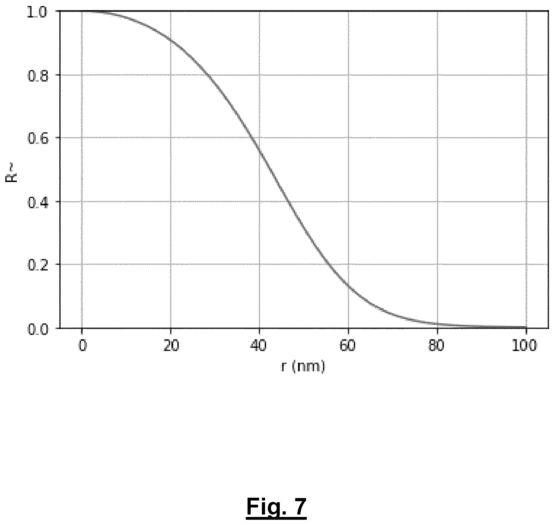

Aus Fig. 6 lässt sich ein Gewichtungsfaktor R̃ = (1 - R) / (1 - R₀) ableiten, mit dem das Fluoreszenzlicht 18 von den im Abstand des Radius r zu dem Zentrum des Arrays 16 angeordneten Fluoreszenzlichtsensoren 17 detektierten Fluoreszenzlicht 18 zu gewichten ist. Der aus Fig. 6 resultierende Verlauf von R̃ ist in **Fig. 7** aufgetragen.

Noch besser als in Abhängigkeit vom Abstand des jeweiligen Fluoreszenzlichtsensors 17 zu dem Zentrum des Arrays 16 wird der Gewichtungsfaktor R̃ abhängig von dem konkret für den jeweiligen Fluoreszenzlichtsensor 17 bestimmten Quotienten R zwischen 1 bei R = R₀ und 0 bei R = 1 festgelegt.

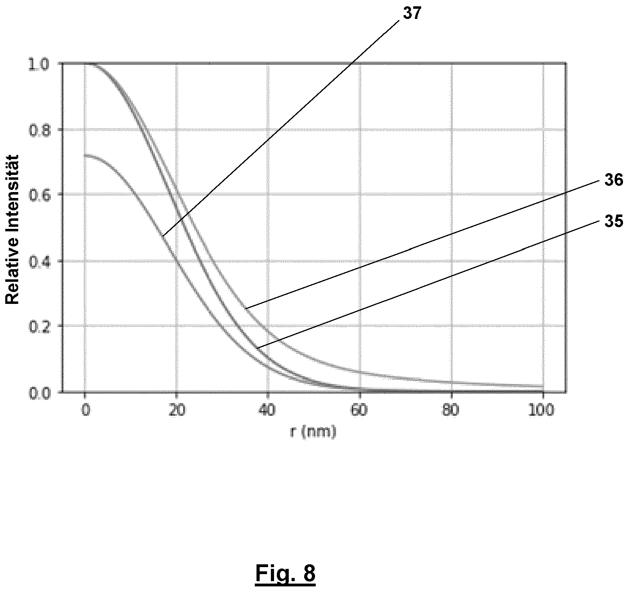

**Fig. 8** zeigt die durch das erfindungsgemäße Verfahren erreichte Punktabbildungsfunktion 35, eine Punktabbildungsfunktion 36 ohne Berücksichtigung des Zeitpunkts des Detektierens des Fluoreszenzlichts 18 und eine Gatingpunktabbildungsfunktion 37, die durch Berücksichtigen nur des in den Zeitraum 34 detektierten Fluoreszenzlichts 18 erhalten wird, d. h. durch so genanntes Gating. Die Gatingpunktabbildungsfunktion 37 weist zwar dieselbe gegenüber der Punktabbildungsfunktion 36 verkleinerte Halbwertsbreite wie die durch das erfindungsgemäße Verfahren erreichte Punktabbildungsfunktion 35 auf, aber eine geringere Amplitude, d. h. geringere Menge des ihr zugrunde liegenden Fluoreszenzlichts 18 und damit ein schlechteres Signal zu Rauschen-Verhältnis.

Die erfindungsgemäße Analyse des zeitlichen Verlaufs des Fluoreszenzlichts 18 an den einzelnen Fluoreszenzlichtsensoren 17 des Arrays 16 kann nicht nur bei einer Lichtintensitätsverteilung des Fluoreszenzverhinderungslichts 6 mit zentralem Minimum, sondern auch mit einer anderen zu der Gauß-förmigen Intensitätsverteilung des Fluoreszenzanregungslichts konzentrischen und beispielsweise ebenfalls Gauß-förmigen Intensitätsverteilung des Fluoreszenzverhinderungslichts dazu genutzt werden, zusätzliche Informationen zum Ort der Fluorophore innerhalb des Fokusbereichs 11 zu gewinnen, die das detektierte Fluoreszenzlicht 18 emittiert haben.

### BEZUGSZEICHENLISTE

- 1: Mikroskop
- 2: Beleuchtungseinrichtung
- 3: Fluoreszenzanregungslichtquelle
- 4: Fluoreszenzanregungslicht
- 5: Fluoreszenzverhinderungslichtquelle
- 6: Fluoreszenzverhinderungslicht
- 7: STED-Licht
- 8: Spiegel
- 9: halbdurchlässiger Spiegel
- 10: Objektiv
- 11: Fokusbereich
- 12: Probenhalter
- 13: Probe
- 14: Strahlformungsmittel
- 15: Strahlengangabschnitt
- 16: Array
- 17: Fluoreszenzlichtsensor
- 18: Fluoreszenzlicht
- 19: halbdurchlässiger Spiegel
- 20: Positioniereinrichtung
- 21: x/y-Scanner
- 22: z-Scanner
- 23: Detektionseinrichtung
- 24: Fluoreszenzlichtsignal
- 25: Steuereinrichtung
- 26: Fokussieren
- 27: Abbilden
- 28: Anordnen
- 29: Detektieren
- 30: Zuordnen
- 31: Analysieren
- 32: Darstellen
- 33: Zeitspanne
- 34: Zeitspanne
- 35: erreichte Punktabbildungsfunktion
- 36: Punktabbildungsfunktion ohne Berücksichtigung des Zeitpunkts des Detektierens des Fluoreszenzlichts 18
- 37: Gatingpunktabbildungsfunktion

## Patentansprüche

1. Verfahren zum Abbilden einer interessierenden Struktur einer Probe (13) mit
- Fokussieren (26) von Fluoreszenzanregungslicht (4) und Fluoreszenzverhinderungslicht (6) in einen Fokusbereich (11), wobei das Fluoreszenzanregungslicht (4) und/oder das Fluoreszenzverhinderungslicht (6) in zeitlich beabstandeten Pulsen in den Fokusbereich (11) gerichtet werden,
- Abbilden (27) des Fokusbereichs (11) auf ein konfokal zu dem Fokusbereich (11) angeordnetes Array (16) von in mindestens einer Richtung nebeneinander angeordneten Fluoreszenzlichtsensoren (17),
- Anordnen (28) des Fokusbereichs (11) an verschiedenen Relativpositionen gegenüber der Probe (13) und
- während des Anordnens (28), Detektieren (29) von Fluoreszenzlicht (18) mit den einzelnen Fluoreszenzlichtsensoren (17) und Zuordnen (30) des jeweiligen Fluoreszenzlichts (18) zu dem jeweiligen Fluoreszenzlichtsensor (17), mit dem es detektiert wurde, und der jeweiligen Relativposition des Fokusbereichs (11), während der es detektiert wurde,
- wobei eine Zeit nach den einzelnen Pulsen, zu der das jeweilige Fluoreszenzlicht (18) mit dem jeweiligen Fluoreszenzlichtsensor (17) detektiert wird, registriert und dem jeweiligen Fluoreszenzlicht (18) zugeordnet wird und
- wobei
- anhand des Fluoreszenzlichtsensors (17), mit dem das jeweilige Fluoreszenzlicht (18) detektiert wurde, und
- anhand der Zeit, zu der das jeweilige Fluoreszenzlicht (18) detektiert wurde,
ein Gewichtungsfaktor festgelegt wird, mit dem das jeweilige Fluoreszenzlicht (18) in eine Fluoreszenzlichtsumme eingeht, die der jeweiligen Relativposition des Fokusbereichs (11) zugeordnet wird.

2. Verfahren nach Anspruch 1, **dadurch gekennzeichnet, dass** beim Festlegen des Gewichtungsfaktors
- die Zeiten berücksichtigt werden, zu denen das gesamte Fluoreszenzlicht (18) während der jeweiligen Relativposition des Fokusbereichs (11) mit dem jeweiligen Fluoreszenzlichtsensor (17) detektiert wurde, und/oder
- die Zeiten berücksichtigt werden, zu denen das gesamte Fluoreszenzlicht (18) während der jeweiligen Relativposition des Fokusbereichs (11) mit den Fluoreszenzlichtsensoren (17) des Arrays (16) detektiert wurde.

3. Verfahren nach Anspruch 1 oder 2, **dadurch gekennzeichnet, dass** für jeden der Fluoreszenzlichtsensoren (17) individuell ein Beginn eines effektiven Detektionszeitraums festgelegt wird, wobei das jeweilige Fluoreszenzlicht (18) in die Fluoreszenzlichtsumme eingeht, wenn es während dem effektiven Detektionszeitraum detektiert wurde.

4. Verfahren nach einem der Ansprüche 1 bis 3, **dadurch gekennzeichnet, dass** registriert wird, binnen welchem von mehreren vordefinierten, nicht vollständig überlappenden Zeitspannen (33, 34) nach den einzelnen Pulsen das Fluoreszenzlicht (18) mit dem jeweiligen Fluoreszenzlichtsensor (17) detektiert wird, und dass die jeweilige Zeitspanne (33, 34) dem detektierten Fluoreszenzlicht (18) zugeordnet wird.

5. Verfahren nach Anspruch 4, **dadurch gekennzeichnet, dass** die Zeitspannen (33, 34) aufeinander folgen.

6. Verfahren nach einem der Ansprüche 1 bis 3, **dadurch gekennzeichnet, dass** für jedes Photon des Fluoreszenzlichts (18) ein Zeitpunkt nach den einzelnen Pulsen, zu dem es mit dem jeweiligen Fluoreszenzlichtsensor (17) detektiert wird, registriert und dem jeweiligen Photon zugeordnet wird.

7. Verfahren zum Abbilden einer interessierenden Struktur einer Probe (13) mit
- Fokussieren von Fluoreszenzanregungslicht (4) und Fluoreszenzverhinderungslicht (6) in einen Fokusbereich (11), wobei das Fluoreszenzanregungslicht (4) und/oder das Fluoreszenzverhinderungslicht (6) in zeitlich beabstandeten Pulsen in den Fokusbereich (11) gerichtet werden,
- Abbilden des Fokusbereichs (11) auf ein konfokal zu dem Fokusbereich (11) angeordnetes Array (16) von in mindestens einer Richtung nebeneinander angeordneten Fluoreszenzlichtsensoren (17) ,
- Anordnen des Fokusbereichs (11) an verschiedenen Relativpositionen gegenüber der Probe (13) und
- während des Anordnens, Detektieren von Fluoreszenzlicht (18) mit den einzelnen Fluoreszenzlichtsensoren (17) nur während eines Detektionszeitraums nach den einzelnen Pulsen und Zuordnen des jeweiligen Fluoreszenzlichts (18) zu der jeweiligen Relativposition des Fokusbereichs (11), während der es detektiert wurde,
- wobei ein Beginn des Detektionszeitraums
- für jeden der Fluoreszenzlichtsensoren (17) oder
- für mehrere Gruppen der Fluoreszenzlichtsensoren (17)
individuell festgelegt wird.

8. Verfahren nach Anspruch 7, **dadurch gekennzeichnet, dass** ein zeitlicher Abstand zwischen den einzelnen Pulsen und dem Beginn des Detektionszeitraums für den jeweiligen Fluoreszenzlichtsensor (17) längs eines geometrisch auf das Array (16) abgebildeten Gradienten einer Intensität des Fluoreszenzverhinderungslichts (6) in dem Fokusbereichs (11) zunimmt.

9. Verfahren nach Anspruch 7 oder 8, **dadurch gekennzeichnet, dass** der Beginn des Detektionszeitraums jeweils für die Fluoreszenzlichtsensoren (17) einer solchen Gruppe gleich festgelegt wird, auf deren Fluoreszenzlichtsensoren (17) gleiche Intensitäten des Fluoreszenzverhinderungslichts (6) in dem Fokusbereichs (11) abgebildet werden.

10. Verfahren nach einem der vorhergehenden Ansprüche, **dadurch gekennzeichnet, dass** das Fluoreszenzanregungslicht (4) so geformt wird, dass es ein zentrales Intensitätsmaximum in dem Fokusbereich (11) aufweist, während das Fluoreszenzverhinderungslicht (6) so geformt wird, dass es ein zentrales Intensitätsminimum in dem Fokusbereich (11) aufweist.

11. Mikroskop (1) mit
- einer Fluoreszenzanregungslicht (4) und Fluoreszenzverhinderungslicht (6) in einen Fokusbereich (11) fokussierenden Beleuchtungseinrichtung (2), wobei die Beleuchtungseinrichtung (2) das Fluoreszenzanregungslicht (4) und/oder das Fluoreszenzverhinderungslicht (6) in zeitlich beabstandeten Pulsen in den Fokusbereich (11) richtet,
- einer den Fokusbereich (11) auf ein konfokal zu dem Fokusbereich (11) angeordnetes Array (16) von in mindestens einer Richtung nebeneinander angeordneten Fluoreszenzlichtsensoren (17) abbildenden Detektionseinrichtung (23),
- einer den Fokusbereichs (11) an verschiedenen Relativpositionen gegenüber einem Probenhalter (12) anordnenden Positioniereinrichtung (20),
- wobei die Detektionseinrichtung (23) dazu eingerichtet ist, mit den einzelnen Fluoreszenzlichtsensoren (17) Fluoreszenzlicht (18) zu detektieren und dem jeweiligen Fluoreszenzlichtsensor (17), mit dem es detektiert wurde, und der jeweiligen Relativposition des Fokusbereichs (11), während der es detektiert wurde, zuzuordnen,
- wobei die Detektionseinrichtung (23) dazu eingerichtet ist, eine Zeit nach den einzelnen Pulsen, zu der das jeweilige Fluoreszenzlicht (18) mit dem jeweiligen Fluoreszenzlichtsensor (17) detektiert wird, zu registrieren und dem jeweiligen Fluoreszenzlicht (18) zuzuordnen und
- wobei die Detektionseinrichtung (23) dazu eingerichtet ist, der jeweiligen Relativposition des Fokusbereichs (11) eine Fluoreszenzlichtsumme zuzuordnen, in die das jeweilige Fluoreszenzlicht (18) mit einem
- anhand des Fluoreszenzlichtsensors (17), mit dem das jeweilige Fluoreszenzlicht (18) detektiert wurde, und
- anhand der Zeit, zu der das jeweilige Fluoreszenzlicht (18) detektiert wurde, festgelegten Gewichtungsfaktor eingeht.

12. Mikroskop (1) nach Anspruch 11, **dadurch gekennzeichnet, dass** die Detektionseinrichtung (23) dazu eingerichtet ist, zu registrieren, binnen welcher von mehreren vordefinierten, nicht vollständig überlappenden Zeitspannen (33, 34) nach den einzelnen Pulsen das Fluoreszenzlicht (18) mit dem jeweiligen Fluoreszenzlichtsensor (17) detektiert wird, und die jeweilige Zeitspanne (33, 34) dem detektierten Fluoreszenzlicht (18) zuzuordnen.

13. Mikroskop (1) nach Anspruch 12, **dadurch gekennzeichnet, dass** die Zeitspannen (33, 34) aufeinander folgen.

14. Mikroskop (1) nach Anspruch 11, **dadurch gekennzeichnet, dass** die Detektionseinrichtung (23) dazu eingerichtet ist, für jedes Photon des Fluoreszenzlichts (18) ein Zeitpunkt nach den einzelnen Pulsen, zu dem es mit dem jeweiligen Fluoreszenzlichtsensor (17) detektiert wird, zu registrieren und dem jeweiligen Photon zuzuordnen.

15. Mikroskop (1) mit
- einer Fluoreszenzanregungslicht (4) und Fluoreszenzverhinderungslicht (6) in einen Fokusbereich (11) fokussierenden Beleuchtungseinrichtung (2), wobei die Beleuchtungseinrichtung (2) das Fluoreszenzanregungslicht (4) und/oder das Fluoreszenzverhinderungslicht (6) in zeitlich beabstandeten Pulsen in den Fokusbereich (11) richtet,
- einer den Fokusbereich (11) auf ein konfokal zu dem Fokusbereich (11) angeordnetes Array (16) von in mindestens einer Richtung nebeneinander angeordneten Fluoreszenzlichtsensoren (17) abbildenden Detektionseinrichtung (23),
- einer den Fokusbereich (11) an verschiedenen Relativpositionen gegenüber einem Probenhalter (12) anordnenden Positioniereinrichtung (20),
- wobei die Detektionseinrichtung (23) dazu eingerichtet ist, mit den einzelnen Fluoreszenzlichtsensoren (17) Fluoreszenzlicht (18) selektiv während eines Detektionszeitraums nach den einzelnen Pulsen zu detektieren und der jeweiligen Relativposition des Fokusbereichs (11), während der es detektiert wurde, zuzuordnen, und
- wobei ein Beginn des Detektionszeitraums
- für jeden oder zumindest für mehrere Gruppen der Fluoreszenzlichtsensoren (17) individuell festlegbar ist oder
- für die Fluoreszenzlichtsensoren (17) des Arrays (16) auf verschiedene Werte festgelegt ist.

## Claims

1. Method for imaging a structure of interest of a specimen (13), comprising
- focusing (26) fluorescence excitation light (4) and fluorescence prevention light (6) into a focus region (11), wherein the fluorescence excitation light (4) and/or the fluorescence prevention light (6) are directed into the focus region (11) in temporally spaced pulses,
- imaging (27) the focus region (11) onto an array (16) of fluorescence light sensors (17) arranged next to one another in at least one direction, the array (16) being arranged confocally with the focus region (11),
- arranging (28) the focus region (11) at different relative positions with respect to the specimen (13), and
- during the arranging (28), detecting (29) fluorescence light (18) with the individual fluorescence light sensors (17) and assigning (30) the respective fluorescence light (18) to the respective fluorescence light sensor (17) with which it was detected and to the respective relative position of the focus region (11) during which it was detected,
- wherein a time after the individual pulses at which the respective fluorescence light (18) is detected with the respective fluorescence light sensor (17) is registered and assigned to the respective fluorescence light (18), and
- wherein
- on the basis of the fluorescence light sensor (17) with which the respective fluorescence light (18) was detected, and
- on the basis of the time at which the respective fluorescence light (18) was detected,
a weighting factor is determined with which the respective fluorescence light (18) enters into a fluorescence light sum which is assigned to the respective relative position of the focus region (11).

2. Method according to claim 1, **characterized in that**, in determining the weighting factor,
- the times at which all of the fluorescence light (18) was detected with the respective fluorescence light sensor (17) during the respective relative position of the focus region (11) are taken into account, and/or
- the times at which all of the fluorescence light (18) was detected with the fluorescence light sensors (17) of the array (16) during the respective relative position of the focus region (11) are taken into account.

3. Method according to claim 1 or 2, **characterized in that** a beginning of an effective detection period is determined individually for each of the fluorescence light sensors (17), wherein the respective fluorescence light (18) enters into the fluorescence light sum if it was detected during the effective detection period.

4. Method according to any of the claims 1 to 3, **characterized in that** it is registered within which of a plurality of predefined, not completely overlapping time intervals (33, 34) after the individual pulses the fluorescence light (18) is detected with the respective fluorescence light sensor (17), and that the respective time interval (33, 34) is assigned to the detected fluorescence light (18).

5. Method according to claim 4, **characterized in that** the time intervals (33, 34) follow one another.

6. Method according to any of the claims 1 to 3, **characterized in that**, for each photon of the fluorescence light (18), a point in time after the individual pulses at which it is detected with the respective fluorescence light sensor (17) is registered and assigned to the respective photon.

7. Method for imaging a structure of interest of a specimen (13), comprising
- focusing fluorescence excitation light (4) and fluorescence prevention light (6) into a focus region (11), wherein the fluorescence excitation light (4) and/or the fluorescence prevention light (6) are directed into the focus region (11) in temporally spaced pulses,
- imaging the focus region (11) onto an array (16) of fluorescence light sensors (17) arranged next to one another in at least one direction, the array (16) being arranged confocally with the focus region (11),
- arranging the focus region (11) at different relative positions with respect to the specimen (13), and
- during the arranging, detecting fluorescence light (18) with the individual fluorescence light sensors (17) only during a detection period after the individual pulses and assigning the respective fluorescence light (18) to the respective relative position of the focus region (11) during which it was detected,
- wherein a beginning of the detection period is determined individually
- for each of the fluorescence light sensors (17), or
- for a plurality of groups of the fluorescence light sensors (17).

8. Method according to claim 7, **characterized in that** a temporal distance between the individual pulses and the beginning of the detection period for the respective fluorescence light sensor (17) increases along a gradient, geometrically imaged onto the array (16), of an intensity of the fluorescence prevention light (6) in the focus region (11).

9. Method according to claim 7 or 8, **characterized in that** the beginning of the detection period is determined identically for the fluorescence light sensors (17) of each group onto the fluorescence light sensors (17) of which equal intensities of the fluorescence prevention light (6) in the focus region (11) are imaged.

10. Method according to any of the preceding claims, **characterized in that** the fluorescence excitation light (4) is shaped such that it has a central intensity maximum in the focus region (11), while the fluorescence prevention light (6) is shaped such that it has a central intensity minimum in the focus region (11).

11. Microscope (1) comprising
- an illumination device (2) focusing fluorescence excitation light (4) and fluorescence prevention light (6) into a focus region (11), wherein the illumination device (2) directs the fluorescence excitation light (4) and/or the fluorescence prevention light (6) into the focus region (11) in temporally spaced pulses,
- a detection device (23) imaging the focus region (11) onto an array (16) of fluorescence light sensors (17) arranged next to one another in at least one direction, the array (16) being arranged confocally with the focus region (11),
- a positioning device (20) arranging the focus region (11) at different relative positions with respect to a specimen holder (12),
- wherein the detection device (23) is configured to detect fluorescence light (18) with the individual fluorescence light sensors (17) and to assign it to the respective fluorescence light sensor (17) with which it was detected and to the respective relative position of the focus region (11) during which it was detected,
- wherein the detection device (23) is configured to register a time after the individual pulses at which the respective fluorescence light (18) is detected with the respective fluorescence light sensor (17) and to assign it to the respective fluorescence light (18), and
- wherein the detection device (23) is configured to assign to the respective relative position of the focus region (11) a fluorescence light sum into which the respective fluorescence light (18) enters with a weighting factor determined
- on the basis of the fluorescence light sensor (17) with which the respective fluorescence light (18) was detected, and
- on the basis of the time at which the respective fluorescence light (18) was detected.

12. Microscope (1) according to claim 11, **characterized in that** the detection device (23) is configured to register within which of a plurality of predefined, not completely overlapping time intervals (33, 34) after the individual pulses the fluorescence light (18) is detected with the respective fluorescence light sensor (17), and to assign the respective time interval (33, 34) to the detected fluorescence light (18).

13. Microscope (1) according to claim 12, **characterized in that** the time intervals (33, 34) follow one another.

14. Microscope (1) according to claim 11, **characterized in that** the detection device (23) is configured to register, for each photon of the fluorescence light (18), a point in time after the individual pulses at which it is detected with the respective fluorescence light sensor (17), and to assign it to the respective photon.

15. Microscope (1) comprising
- an illumination device (2) focusing fluorescence excitation light (4) and fluorescence prevention light (6) into a focus region (11), wherein the illumination device (2) directs the fluorescence excitation light (4) and/or the fluorescence prevention light (6) into the focus region (11) in temporally spaced pulses,
- a detection device (23) imaging the focus region (11) onto an array (16) of fluorescence light sensors (17) arranged next to one another in at least one direction, the array (16) being arranged confocally with the focus region (11),
- a positioning device (20) arranging the focus region (11) at different relative positions with respect to a specimen holder (12),
- wherein the detection device (23) is configured to selectively detect fluorescence light (18) with the individual fluorescence light sensors (17) during a detection period after the individual pulses and to assign it to the respective relative position of the focus region (11) during which it was detected, and
- wherein a beginning of the detection period
- is individually determinable for each or at least for a plurality of groups of the fluorescence light sensors (17), or
- is set to different values for the fluorescence light sensors (17) of the array (16).

## Revendications

1. Procédé pour imager une structure d'intérêt d'un échantillon (13) comprenant :
- focaliser (26) de la lumière d'excitation de fluorescence (4) et de la lumière d'inhibition de fluorescence (6) dans une zone focale (11), la lumière d'excitation de fluorescence (4) et/ou la lumière d'inhibition de fluorescence (6) étant dirigée dans la zone focale (11) sous forme d'impulsions espacées dans le temps,
- imager (27) la zone focale (11) sur un réseau (16) disposé confocalement par rapport à la zone focale (11), constitué de capteurs de lumière de fluorescence (17) disposés côte à côte dans au moins une direction,
- disposer (28) la zone focale (11) à différentes positions relatives par rapport à l'échantillon (13) et
- pendant la disposition (28), détecter (29) de la lumière de fluorescence (18) avec les capteurs de lumière de fluorescence (17) individuels et associer (30) la lumière de fluorescence (18) respective au capteur de lumière de fluorescence (17) respectif avec lequel elle a été détectée, ainsi qu'à la position relative respective de la zone focale (11) pendant laquelle elle a été détectée,
- où un instant après les impulsions individuelles, auquel la lumière de fluorescence (18) respective est détectée avec le capteur de lumière de fluorescence (17) respectif, est enregistré et associé à la lumière de fluorescence (18) respective, et
- où
- sur la base du capteur de lumière de fluorescence (17) avec lequel la lumière de fluorescence (18) respective a été détectée, et
- sur la base de l'instant auquel la lumière de fluorescence (18) respective a été détectée, un facteur de pondération est déterminé, avec lequel la lumière de fluorescence (18) respective entre dans une somme de lumière de fluorescence qui est associée à la position relative respective de la zone focale (11).

2. Procédé selon la revendication 1, **caractérisé en ce que** lors de la détermination du facteur de pondération:
- les instants sont pris en compte auxquels toute la lumière de fluorescence (18) a été détectée pendant la position relative respective de la zone focale (11) avec le capteur de lumière de fluorescence (17) respectif, et/ou
- les instants sont pris en compte auxquels toute la lumière de fluorescence (18) a été détectée pendant la position relative respective de la zone focale (11) avec les capteurs de lumière de fluorescence (17) du réseau (16).

3. Procédé selon la revendication 1 ou 2, **caractérisé en ce que** pour chacun des capteurs de lumière de fluorescence (17), un début d'une période de détection effective est déterminé individuellement, la lumière de fluorescence (18) respective entrant dans la somme de lumière de fluorescence lorsqu'elle a été détectée pendant la période de détection effective.

4. Procédé selon l'une des revendications 1 à 3, **caractérisé en ce qu'**on enregistre parmi plusieurs intervalles de temps prédéfinis, non entièrement chevauchants (33, 34) après les impulsions individuelles, la lumière de fluorescence (18) est détectée avec le capteur de lumière de fluorescence (17) respectif, et que l'intervalle de temps (33, 34) respectif est associé à la lumière de fluorescence (18) détectée.

5. Procédé selon la revendication 4, **caractérisé en ce que** les intervalles de temps (33, 34) se succèdent.

6. Procédé selon l'une des revendications 1 à 3, **caractérisé en ce que** pour chaque photon de la lumière de fluorescence (18), un instant après les impulsions individuelles, auquel il est détecté avec le capteur de lumière de fluorescence (17) respectif, est enregistré et associé au photon respectif.

7. Procédé pour imager une structure d'intérêt d'un échantillon (13) comprenant :
- focaliser de la lumière d'excitation de fluorescence (4) et de la lumière d'inhibition de fluorescence (6) dans une zone focale (11), la lumière d'excitation de fluorescence (4) et/ou la lumière d'inhibition de fluorescence (6) étant dirigée dans la zone focale (11) sous forme d'impulsions espacées dans le temps,
- imager la zone focale (11) sur un réseau (16) disposé confocalement par rapport à la zone focale (11), constitué de capteurs de lumière de fluorescence (17) disposés côte à côte dans au moins une direction,
- disposer la zone focale (11) à différentes positions relatives par rapport à l'échantillon (13) et
- pendant la disposition, détecter de la lumière de fluorescence (18) avec les capteurs de lumière de fluorescence (17) individuels uniquement pendant une période de détection après les impulsions individuelles et associer la lumière de fluorescence (18) respective à la position relative respective de la zone focale (11) pendant laquelle elle a été détectée,
- où un début de la période de détection
- pour chacun des capteurs de lumière de fluorescence (17) ou
- pour plusieurs groupes de capteurs de lumière de fluorescence (17) est déterminé individuellement.

8. Procédé selon la revendication 7, **caractérisé en ce qu'**un intervalle de temps entre les impulsions individuelles et le début de la période de détection pour le capteur de lumière de fluorescence (17) respectif augmente le long d'un gradient d'intensité de la lumière d'inhibition de fluorescence (6) représenté géométriquement sur le réseau (16) dans la zone focale (11).

9. Procédé selon la revendication 7 ou 8, **caractérisé en ce que** le début de la période de détection est déterminé de manière identique pour les capteurs de lumière de fluorescence (17) d'un tel groupe, sur les capteurs de lumière de fluorescence (17) desquels des intensités identiques de la lumière d'inhibition de fluorescence (6) dans la zone focale (11) sont imager.

10. Procédé selon l'une des revendications précédentes, **caractérisé en ce que** la lumière d'excitation de fluorescence (4) est formée de manière à présenter un maximum d'intensité central dans la zone focale (11), tandis que la lumière d'inhibition de fluorescence (6) est formée de manière à présenter un minimum d'intensité central dans la zone focale (11).

11. Microscope (1) comprenant :
- un dispositif d'éclairage (2) focalisant la lumière d'excitation de fluorescence (4) et la lumière d'inhibition de fluorescence (6) dans une zone focale (11), le dispositif d'éclairage (2) dirigeant la lumière d'excitation de fluorescence (4) et/ou la lumière d'inhibition de fluorescence (6) dans la zone focale (11) sous forme d'impulsions espacées dans le temps,
- un dispositif de détection (23) imager la zone focale (11) sur un réseau (16) disposé confocalement par rapport à la zone focale (11), constitué de capteurs de lumière de fluorescence (17) disposés côte à côte dans au moins une direction,
- un dispositif de positionnement (20) disposant la zone focale (11) à différentes positions relatives par rapport à un porte-échantillon (12),
- où le dispositif de détection (23) est configuré pour détecter de la lumière de fluorescence (18) avec les capteurs de lumière de fluorescence (17) individuels et associer au capteur de lumière de fluorescence (17) respectif avec lequel elle a été détectée, ainsi qu'à la position relative respective de la zone focale (11) pendant laquelle elle a été détectée,
- où le dispositif de détection (23) est configuré pour enregistrer un instant après les impulsions individuelles, auquel la lumière de fluorescence (18) respective est détectée avec le capteur de lumière de fluorescence (17) respectif, et associer cet instant à la lumière de fluorescence (18) respective,
- où le dispositif de détection (23) est configuré pour associer à la position relative respective de la zone focale (11) une somme de lumière de fluorescence, dans laquelle la lumière de fluorescence (18) respective entre avec un
- facteur de pondération déterminé sur la base du capteur de lumière de fluorescence (17) avec lequel la lumière de fluorescence (18) respective a été détectée, et
sur la base de l'instant auquel la lumière de fluorescence (18) respective a été détectée.

12. Microscope (1) selon la revendication 11, **caractérisé en ce que** le dispositif de détection (23) est configuré pour enregistrer dans laquelle des plusieurs intervalles de temps prédéfinis, non entièrement chevauchants (33, 34) après les impulsions individuelles, la lumière de fluorescence (18) est détectée avec le capteur de lumière de fluorescence (17) respectif, et associer l'intervalle de temps (33, 34) respectif à la lumière de fluorescence (18) détectée.

13. Microscope (1) selon la revendication 12, **caractérisé en ce que** les intervalles de temps (33, 34) se succèdent.

14. Microscope (1) selon la revendication 11, **caractérisé en ce que** le dispositif de détection (23) est configuré pour enregistrer, pour chaque photon de la lumière de fluorescence (18), un instant après les impulsions individuelles, auquel il est détecté avec le capteur de lumière de fluorescence (17) respectif, et associer cet instant au photon respectif.

15. Microscope (1) comprenant :
- un dispositif d'éclairage (2) focalisant la lumière d'excitation de fluorescence (4) et la lumière d'inhibition de fluorescence (6) dans une zone focale (11), le dispositif d'éclairage (2) dirigeant la lumière d'excitation de fluorescence (4) et/ou la lumière d'inhibition de fluorescence (6) dans la zone focale (11) sous forme d'impulsions espacées dans le temps,
- un dispositif de détection (23) imager la zone focale (11) sur un réseau (16) disposé confocalement par rapport à la zone focale (11), constitué de capteurs de lumière de fluorescence (17) disposés côte à côte dans au moins une direction,
- un dispositif de positionnement (20) disposant la zone focale (11) à différentes positions relatives par rapport à un porte-échantillon (12),
- où le dispositif de détection (23) est configuré pour détecter de la lumière de fluorescence (18) sélectivement avec les capteurs de lumière de fluorescence (17) individuels pendant une période de détection après les impulsions individuelles et associer la lumière de fluorescence (18) respective à la position relative respective de la zone focale (11) pendant laquelle elle a été détectée, et
- où un début de la période de détection
- pour chacun ou au moins pour plusieurs groupes de capteurs de lumière de fluorescence (17) peut être déterminé individuellement ou
- pour les capteurs de lumière de fluorescence (17) du réseau (16) est déterminé à différentes valeurs.
